# EUROPEAN PATENT SPECIFICATION

(11) **EP 4 108 368 B1**
(45) Date of publication and mention of the grant of the patent: **06.12.2023**
(21) Application number: 21181283.9
(22) Date of filing: 23.06.2021
(51) Int. Cl.: B23B 31/26, B23B 31/30

(54) **CLAMPING DEVICE FOR TOOL HOLDER**
SPANNVORRICHTUNG FÜR WERKZEUGHALTER
DISPOSITIF DE SERRAGE POUR PORTE-OUTILS

(43) Date of publication of application: 28.12.2022
(73) Proprietor: AB Sandvik Coromant, 811 81 Sandviken (SE)
(72) Inventor: MÄTLIK, Gunnar, 811 81 Sandviken (SE)
(74) Representative: Sandvik

(56) References cited:
- EP-A1- 3 825 046
- EP-B1- 1 468 767

## Description

### FIELD OF THE INVENTION AND PRIOR ART

The present invention relates to a clamping device according to the preamble of claim 1, which is intended to be used for connecting a tool holder to a machine tool.

Within the field of machine tools for metal cutting, the cutting tools, for instance in the form of drills or milling tools, used for machining work pieces of metallic material are often fixed to and rotated together with a tool holder, which in its turn may be detachably clamped to a rotatable spindle of the machine tool in order to be rotated together with the spindle. It is previously know to clamp a shank of such a tool holder to a rotatable spindle by means of a clamping mechanism arranged in the spindle. When the cutting tool needs to be exchanged, the tool holder is released from the spindle and a new tool holder with another cutting tool is clamped to the spindle.

A clamping device comprising a spindle with a clamping mechanism adapted for an automatic tool changing operation is previously known from EP 1 468 767 B1. In the clamping device according to EP 1 468 767 B1, an actuating member in the form of a first drawbar is slidably mounted inside the spindle and configured to effect an axial displacement of a second drawbar via a force amplifying mechanism comprising a number of co-operating wedges arranged between the drawbars. A gas spring inside the spindle is configured to urge the two drawbars into a retracted locking position, in which a tool holder is clamped to the spindle, and a hydraulic piston may be configured to act on a piston at the rear end of the gas spring in order to achieve a displacement of the two drawbars into an advanced releasing position, in which the tool holder may be released from the spindle. However, this previously known clamping device has a relatively long axial extent and it is therefore not suitable to use this type of clamping device when tool holders are to be detachably fixed at the periphery of a tool turret where the available axial space for the clamping device is limited.

A clamping device according to the preamble of claim 1 is previously known from EP 3 825 046 A1.

### OBJECT OF THE INVENTION

The object of the present invention is to provide a clamping device of the above-mentioned type that has a new and favourable design and that is suitable for use with a tool turret of a machine tool.

### SUMMARY OF THE INVENTION

According to the invention, said object is achieved by means of a clamping device having the features defined in claim 1.

The clamping device according to the invention comprises:
- a housing;
- a spindle rotatably mounted inside the housing and having a front end, a rear end and a bore which intersects the front end and extends rearwardly therefrom, wherein a mounting portion for receiving the tool holder shank is provided at a front end of the bore;
- a drawbar slidably mounted inside the bore so as to be reciprocally moveable in the bore along a longitudinal axis thereof between an advanced releasing position and a retracted locking position;
- engagement members arranged around the drawbar at a front end thereof, wherein the engagement members, under the effect of a movement of the drawbar from the advanced releasing position to the retracted locking position, are moveable from a first position, in which the engagement members allow the tool holder shank to move into and out of said mounting portion of the bore, to a second position, in which the engagement members are in locking engagement with the tool holder shank and keep it secured to the spindle;
- an actuating member arranged inside the housing, wherein the actuating member is slidably mounted to the spindle so as to be moveable in relation to the spindle in the axial direction thereof;
- a motion transferring mechanism arranged inside the housing, wherein the motion transferring mechanism is mounted to the spindle and configured to transfer an axial movement of the actuating member in a first axial direction in relation to the spindle into a movement of the drawbar from the advanced releasing position to the retracted locking position; and
- a hydraulic actuator for moving the actuating member axially in relation to the spindle, the hydraulic actuator being arranged in the housing and comprising a cylinder housing and a piston member, wherein the piston member extends around the spindle and is slidably mounted to the cylinder housing so as to be hydraulically moveable axially in relation to the spindle in order to allow the piston member to exert a pulling or pushing force on the actuating member in the first axial direction and thereby effect a movement of the drawbar from the advanced releasing position to the retracted locking position.

The actuating member is rotatable in relation to the cylinder housing and the piston member together with the spindle, which implies that the hydraulic actuator may remain stationary during the machining operations when the tool holder is rotated together with the spindle. By avoiding rotating parts in the hydraulic actuator, the construction of the hydraulic actuator and the associated hydraulic system is facilitated and no rotary seals that would limit the possible rotational speed of the spindle are required at the interface between the housing and the spindle. The use of a hydraulic actuator for moving the actuating member, and thereby achieving a movement of the drawbar, implies that the clamping device according to the invention is suitable for use in automatic tool changing operations.

The cylinder housing extends around the spindle and is slidably mounted inside the housing of the clamping device so as to be moveable axially in relation to the spindle between a first end position, in which the cylinder housing abuts against a first shoulder on the spindle that limits the movement of the cylinder housing in relation to the spindle in said first axial direction, and a second end position, in which the cylinder housing abuts against a second shoulder on the spindle that limits the movement of the cylinder housing in relation to the spindle in an opposite second axial direction. The piston member comprises an annular piston head slidably received in a space in the cylinder housing, wherein a first hydraulic chamber is formed in this space on a first side of the piston head, the cylinder housing being moveable into the second end position and the piston member being moveable in the first axial direction by feeding of hydraulic fluid into this first hydraulic chamber.

Thus, the cylinder housing is mounted in an axially floating manner inside the housing of the clamping device so as to be axially moveable a short distance in relation to the housing and the spindle. When the drawbar is to be moved into the retracted locking position, hydraulic fluid is fed into the first hydraulic chamber, which will cause a movement of the cylinder housing into its second end position and make the cylinder housing abut against the second shoulder on the spindle. The second shoulder on the spindle acts as a stop member for the cylinder housing and upon further feeding of hydraulic fluid into the first hydraulic chamber, the piston member will be pushed in the first axial direction and thereby make the actuating member effect a movement of the drawbar to the retracted locking position. During this axial movement of the piston member and the drawbar, the piston member exerts a force on the actuating member in the first axial direction, whereas the cylinder housing exerts a corresponding reaction force on the spindle via the second shoulder on the spindle. Hereby, no forces are transferred to the housing of the clamping device during the movement of the drawbar to the retracted locking position and the rotary bearings between the spindle and the housing of the clamping device are therefore not subjected to any axial forces during this actuation of the hydraulic actuator, which in its turn implies reduced stress on the rotary bearings. As compared to prior art solutions where rotary bearings between the spindle and the housing of the clamping device are subjected to axial stress during movement of the drawbar, the solution according to the present invention makes it possible to use rotary bearings of smaller dimensions without any reduction of the expected service life of the rotary bearings or to obtain a longer expected service life of the rotary bearings when using rotary bearings of the same dimensions.

The clamping device according to the present invention may be mounted to a tool turret of a machine tool, wherein the rotatable spindle of the clamping device is connected or connectable to a drive mechanism in the tool turret. However, the clamping device is not limited to use in a tool turret. On the contrary, the rotatable spindle of the clamping device could constitute the main spindle of a machine tool or be connected to such a main spindle without any intermediate tool turret.

According to an embodiment of the invention, the actuating member is configured to assume a self-locking axial position on the spindle when the drawbar has been forced into the retracted locking position under the effect of the actuating member and the motion transferring mechanism, so as to thereby keep the drawbar in the retracted locking position. Hereby, the actuating member is capable of keeping the drawbar in the retracted locking position during rotation of the spindle without requiring any external force from the piston member, which implies that the piston member only needs to exert a pulling or pushing force on the actuating member in connection with a tool changing operation when the spindle and the actuating member are in a stationary position. Hereby, frictional forces between the actuating member and the piston member, and between the cylinder housing and the spindle, during rotation of the spindle may be avoided or at least reduced to a very low level.

According to another embodiment of the invention, a second hydraulic chamber is formed in said space in the cylinder housing on an opposite second side of the piston head, the cylinder housing being moveable into the first end position and the piston member being moveable in the second axial direction by feeding of hydraulic fluid into this second hydraulic chamber in order to allow the piston member to exert a pulling or pushing force on the actuating member in the second axial direction. A double-acting piston member is hereby achieved and one and the same piston member may consequently be used for moving the actuating member in the first axial direction when the drawbar is to be moved from the advanced releasing position to the retracted locking position and for moving the actuating member in the opposite direction when the drawbar is to be moved from the retracted locking position to the advanced releasing position, which in its turn implies that the clamping device can be made very compact. When the drawbar is to be moved into the advanced releasing position, hydraulic fluid is fed into the second hydraulic chamber, which will cause a movement of the cylinder housing into its first end position and make the cylinder housing abut against the first shoulder on the spindle. The first shoulder on the spindle acts as a stop member for the cylinder housing and upon further feeding of hydraulic fluid into the second hydraulic chamber, the piston member will be pushed in the second axial direction and thereby make the actuating member effect a movement of the drawbar to the advanced releasing position. During this axial movement of the piston member and the drawbar, the piston member exerts a force on the actuating member in the second axial direction, whereas the cylinder housing exerts a corresponding reaction force on the spindle via the first shoulder on the spindle. Hereby, no forces are transferred to the housing of the clamping device during the movement of the drawbar to the advanced releasing position and the rotary bearings between the spindle and the housing of the clamping device are therefore not subjected to any axial forces during this actuation of the hydraulic actuator, which in its turn implies reduced stress on the rotary bearings.

According to another embodiment of the invention, the cylinder housing comprises a first cylindrical wall that limits said space in the cylinder housing in radial direction outwards and an opposite second cylindrical wall that limits said space in the cylinder housing in radial direction inwards. Thus, the piston head of the piston member is slidably received between these cylindrical walls.

According to another embodiment of the invention, an internal protuberance is provided on an inner side of the cylinder housing, wherein the cylinder housing is configured to abut against the first shoulder on the spindle via this internal protuberance in said first end position and to abut against the second shoulder on the spindle via this internal protuberance in said second end position, and wherein the internal protuberance on the cylinder housing is received with play in a gap formed between the first and second shoulders on the spindle. Hereby, a connection between the cylinder housing and the spindle may be achieved in a simple and reliable manner during a tool changing operation.

According to another embodiment of the invention, the cylinder housing is configured to be out of contact with the spindle when assuming an intermediate axial position between said first and second end positions. The cylinder housing is intended to be in this intermediate axial position between the moments when tool changing operations are performed, i.e. during the machining operations when the tool holder is rotated together with the spindle. Hereby, frictional forces between the cylinder housing and the spindle during rotation of the spindle may be avoided.

According to another embodiment of the invention, the clamping device comprises a spring-loaded return mechanism that is configured to act on the cylinder housing, wherein:
- the cylinder housing is moveable from said intermediate axial position to the first end position against the action of a spring force of the return mechanism and from the first end position to the intermediate axial position under the action of this spring force; and
- the cylinder housing is moveable from said intermediate axial position to the second end position against the action of a spring force of the return mechanism and from the second end position to the intermediate axial position under the action of this spring force.

Thus, the cylinder housing is urged towards the intermediate axial position by the spring force of the return mechanism. By means of the spring-loaded return mechanism, it is possible to ensure that the cylinder housing is automatically moved out of contact with the spindle after the completion of a tool changing operation, so that there will be no generation of frictional heat at an interface between the cylinder housing and the spindle when the spindle is rotated at high speed in relation to the cylinder housing after the tool changing operation.

According to another embodiment of the invention, the piston member comprises a sleeve-shaped piston stem fixed to the piston head, wherein the piston member is configured to exert said pulling or pushing force on the actuating member through the piston stem. The piston stem is with advantage configured to delimit the first hydraulic chamber in radial direction inwards.

According to another embodiment of the invention, the actuating member has the form of a sleeve, wherein the actuating member is arranged around a peripheral wall of the spindle and slidably mounted to this peripheral wall so as to be axially moveable in relation to the spindle.

Another embodiment of the invention is characterized in:
- that the motion transferring mechanism comprises a first wedge slidably received in a first aperture that extends radially through the peripheral wall of the spindle, wherein the first wedge is configured to press the drawbar towards the retracted locking position when it is pressed radially inwards in the first aperture;
- that the first wedge comprises a first pressure receiving surface that faces outwards from the spindle;
- that the actuating member on its inner side is provided with a first pressure applying surface, which faces inwards for contacting the first pressure receiving surface and has a radial distance to the longitudinal axis that increases as seen in the first axial direction; and
- that the first pressure applying surface is configured to press the first wedge radially inwards in the first aperture by pressing against the first pressure receiving surface when the actuating member is moved in the first axial direction.

The drawbar is moveable from the advanced releasing position to the retracted locking position under the effect of the actuating member and the first wedge by movement of the actuating member in the first axial direction. Since the first pressure applying surface has a radial distance to the longitudinal axis that increases in the first axial direction, a movement of the actuating member in the first axial direction will cause a pressure to be applied by the first pressure applying surface on the first pressure receiving surface on the first wedge. This pressure will have a component in the radial direction such that the first wedge is pressed radially inwards towards the longitudinal axis.

The first pressure applying surface and the first pressure receiving surface are preferably inclined in relation to the longitudinal axis by such an angle α that the first wedge will keep the actuating member in a self-locking axial position on the peripheral wall when the drawbar has been forced into the retracted locking position under the effect of the actuating member and the first wedge. In this case, the first pressure applying surface and the first pressure receiving surface both extend in the same direction when viewed in a longitudinal section through the spindle. The angle α is chosen so as to be below a self-lock threshold angle, such that the actuating member attains a self-locking axial position in relation to the first wedge when the drawbar has been displaced inside the bore into the retracted locking position. To obtain a self-locking axial position, the angle α should be sufficiently small, i.e. below the self-lock threshold angle. A self-locking axial position refers to an axial position in which the static frictional force between the first pressure receiving surface on the first wedge and the first pressure applying surface on the actuating member is greater than the opposing force in the plane of friction that is caused by a force applied to the first wedge in a radial direction perpendicular to the longitudinal axis. Hence, a self-locking axial position is obtained within an angular range that depends on the coefficient of friction between the first pressure receiving surface on the first wedge and the first pressure applying surface on the actuating member. This coefficient of friction depends on various parameters, such as the materials used, coatings on the surfaces, use of lubricants, etc. Hence, the self-lock threshold angle is dependent on such parameters. A person skilled in the art will be able to identify the self-lock threshold angle that apply in each specific case by using common general knowledge and/or routine experiments, or at least predict or assess whether a certain angle is below such a self-lock threshold angle. In general, it is preferred to choose an angle α that is well below the self-lock threshold angle, to thereby ensure a self-locking configuration. A further benefit of using a small angle α is that a force-amplifying effect is achieved, owing to the fact that a small angle α implies that a relatively long axial displacement of the actuating member will result in a relatively short axial displacement of the drawbar. However, a too small angle α may be inefficient and not practically well-functioning. For example, a very small angle α may render it difficult to release the actuating member from the self-locking axial position. The angle α is with advantage between 2° and 10°. With an angle α within this range, a self-locking effect as well as an appropriate force-amplifying effect may be achieved.

According to another embodiment of the invention, the first wedge comprises a wedge surface, which faces towards the rear end of the spindle and is in contact with a first slide surface on the drawbar facing towards the front end of the spindle.

Another embodiment of the invention is characterized in:
- that the motion transferring mechanism comprises a second wedge slidably received in a second aperture that extends radially through the peripheral wall of the spindle, wherein the second wedge comprises a wedge surface, which faces towards the front end of the spindle and is in contact with a second slide surface on the drawbar facing towards the rear end of the spindle, and a second pressure receiving surface, which faces outwards from the spindle, the second wedge being configured to press the drawbar towards the advanced releasing position when it is pressed radially inwards in the second aperture;
- that the actuating member on its inner side is provided with a second pressure applying surface, which faces inwards for contacting the second pressure receiving surface and has a radial distance to the longitudinal axis that increases as seen in the second axial direction; and
- that the second pressure applying surface is configured to press the second wedge radially inwards in the second aperture by pressing against the second pressure receiving surface when the actuating member is moved in the second axial direction.

The drawbar is moveable from the retracted locking position to the advanced releasing position under the effect of the actuating member and the second wedge by movement of the actuating member in the second axial direction. Since the second pressure applying surface has a radial distance to the longitudinal axis that increases in the second axial direction, a movement of the actuating member in the second axial direction will cause a pressure to be applied by the second pressure applying surface on the second pressure receiving surface on the second wedge. This pressure will have a component in the radial direction such that the second wedge is pressed radially inwards towards the longitudinal axis.

According to another embodiment of the invention, the clamping device comprises two or more such first wedges spaced apart in the circumferential direction of the peripheral wall, wherein each first wedge is received in a respective first aperture that extends radially through the peripheral wall. The clamping device may also comprise two or more such second wedges spaced apart in the circumferential direction of the peripheral wall, wherein each second wedge is received in a respective second aperture that extends radially through the peripheral wall. The first apertures and the associated first wedges, as well as the second apertures and the associated second wedges, are preferably evenly distributed in the circumferential direction of the peripheral wall. Hereby, a well-balanced clamping device with good force distribution is obtained. A very high number of wedges and associated apertures may however be unfavourable, owing to the fact that each aperture will reduce the strength of the housing. Three first wedges and three second wedges with associated apertures will give a well-balanced clamping device with a suitable level of force distribution, while still maintaining a sufficient strength of the housing. The first wedges and the second wedges are with advantage alternately arranged as seen in the circumferential direction of the peripheral wall, wherein each one of the first wedges is followed by one of the second wedges as seen in the circumferential direction of the peripheral wall and each one of the second wedges is followed by one of the first wedges as seen in the circumferential direction of the peripheral wall.

Further advantageous features of the clamping device according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a planar view of a clamping device according to an embodiment of the present invention and a tool holder,
- Fig 2: is a partly cut perspective view of the clamping device and tool holder of Fig 1, with the tool holder detached from the clamping device,
- Fig 3a: is a longitudinal section through the clamping device and tool holder of Fig 1, with the drawbar of the clamping device shown in an advanced releasing position and with the cylinder housing shown in a first end position,
- Fig 3b: is a longitudinal section corresponding to Fig 3a, with the drawbar shown in a retracted locking position and with the cylinder housing shown in a second end position,
- Fig 3c: is a longitudinal section corresponding to Fig 3a, with the drawbar shown in the retracted locking position and with the cylinder housing shown in an intermediate axial position,
- Fig 4: is a partly cut perspective view of parts included in the clamping device of Fig 1,
- Fig 5: is a longitudinal section through the tool holder and the parts of the clamping device shown in Fig 4, with the tool holder in a clamped state,
- Fig. 6: is a longitudinal section corresponding to Fig 5, with the tool holder in an unclamped state,
- Fig 7: is an exploded view of the tool holder and the parts of the clamping device shown in Fig 4, and
- Fig 8: is an exploded view from another direction of the tool holder and the parts of the clamping device shown in Fig 4.

### DETAILED DESCRIPTION OF EMBODIMENTS OF THE INVENTION

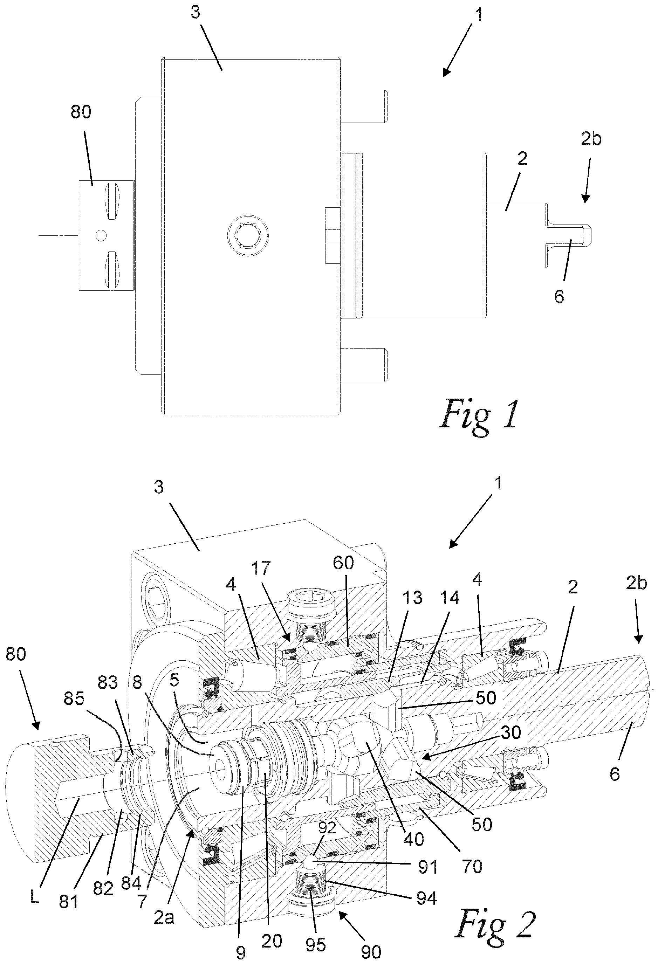

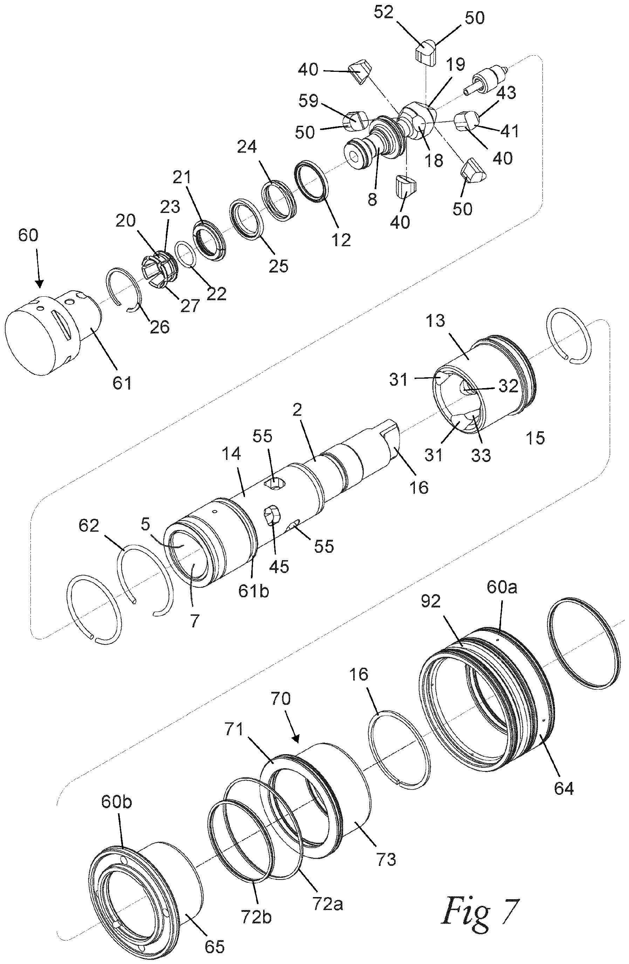

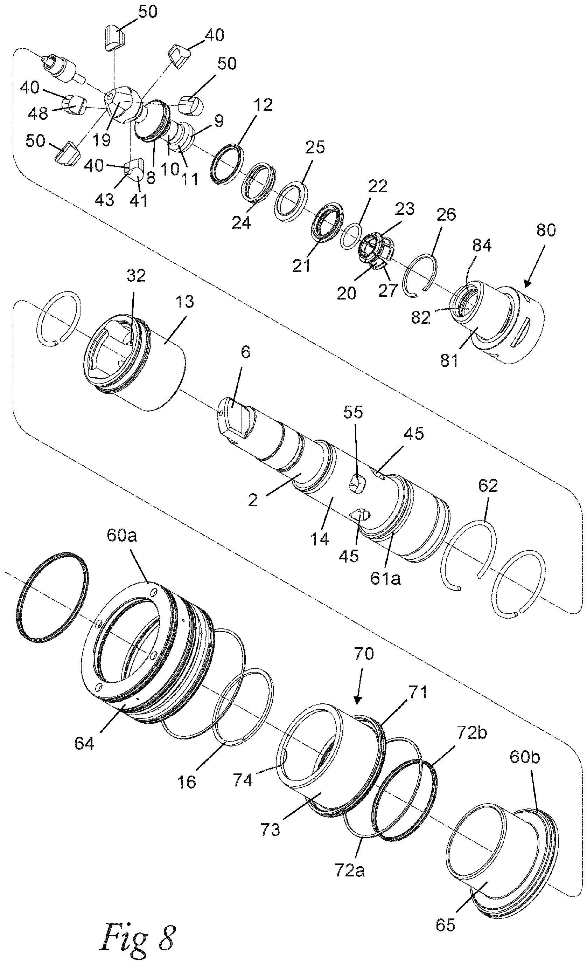

A clamping device 1 according to an embodiment of the present invention is illustrated in Figs 1-8. The clamping device 1 is configured to releasably clamp a tool holder 80 (very schematically illustrated in the drawings) to a rotatable spindle 2 in the clamping device and enable the machining of a work piece by means of a cutting tool (not shown) fixed to the tool holder 80.

The spindle 2 is rotatably mounted to a housing 3 of the clamping device 1 by means of rolling bearings 4, for instance in the form of tapered roller bearings or any other suitable type of roller bearings. The spindle 2 has a front end 2a, a rear end 2b and a bore 5 which intersects the front end 2a and extends rearwardly therefrom. Thus, the bore 5 has an entrance opening at the front end 2a of the spindle. The spindle 2 is connectable to a drive mechanism of a machine tool, for instance a drive mechanism in a tool turret of a machine tool, via a connection pin 6 at the rear end 2b of the spindle in order to allow the spindle to be driven in rotation by the drive mechanism.

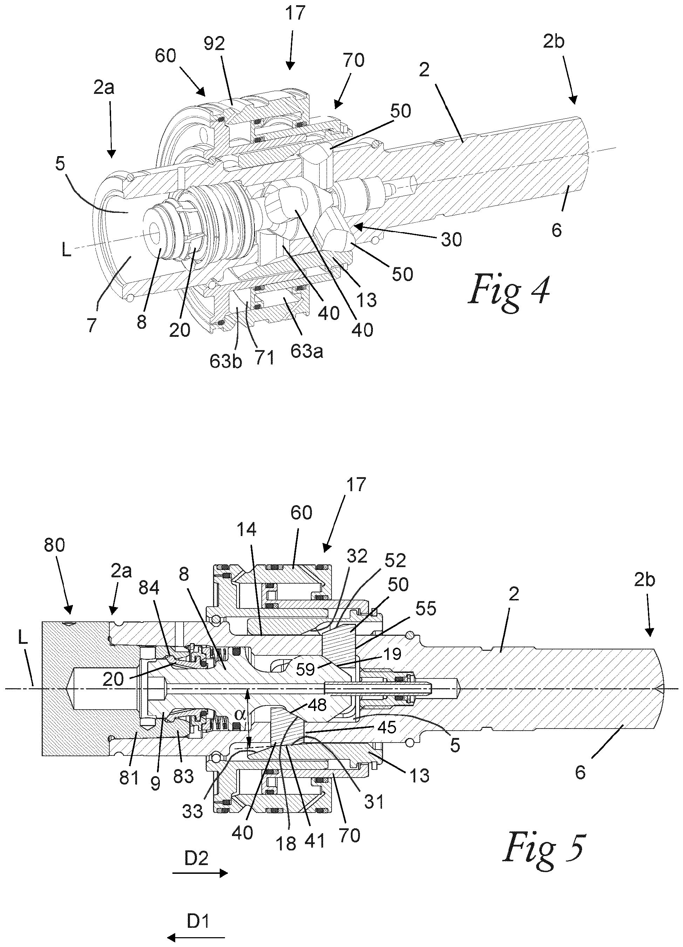

A mounting portion 7 (see Figs 2 and 4) for receiving a mounting shank 81 on the tool holder 80 is provided at a front end of the bore 5. This mounting shank 81 is here referred to as tool holder shank.

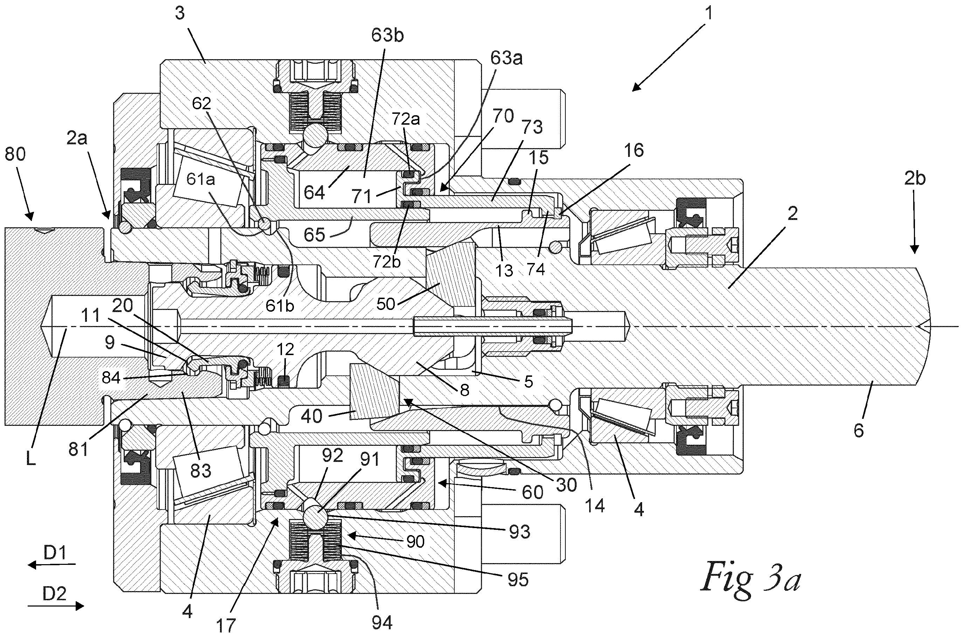

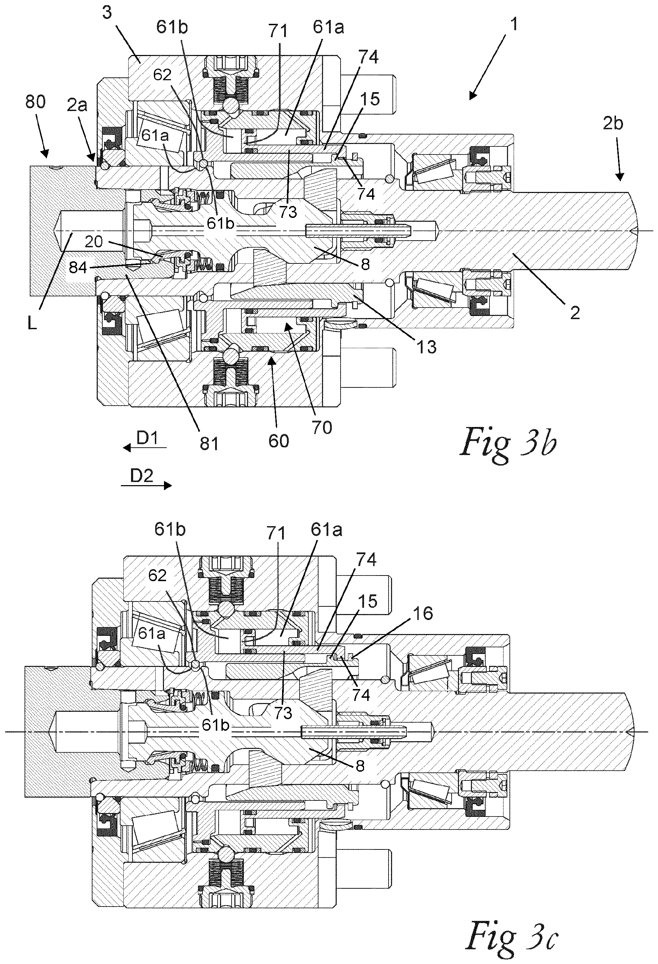

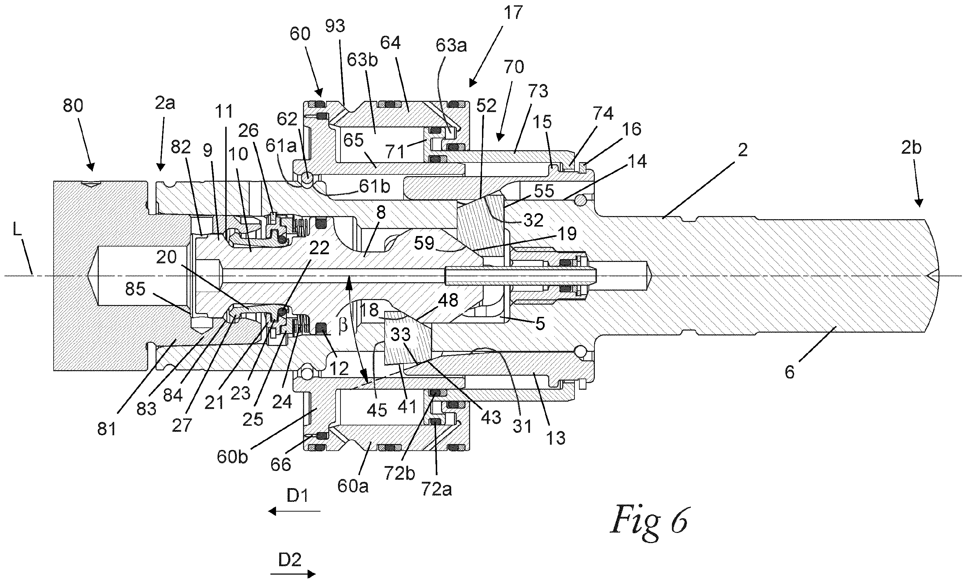

A drawbar 8 is slidably mounted inside the bore 5 so as to be reciprocally moveable in the bore 5 along a longitudinal axis L thereof between an advanced releasing position (see Figs 3a and 6) and a retracted locking position (see Figs 3b, 3c and 5). The drawbar 8 has a front end facing the entrance opening of the bore 5 and an opposite rear end. A head portion 9 and a neck portion 10 are provided at the front end of the drawbar 8. The head portion 9 is located in front of the neck portion 10 as seen in the longitudinal direction of the drawbar, wherein the head portion 9 is connected to the neck portion 10 via a rearwardly facing bevelled surface 11 on the head portion 9. A sealing ring 12 is arranged between the drawbar 8 and an inner surface of the bore 5. In the illustrated example, this sealing ring 12 is received in a groove on the outer side of the drawbar 8.

The tool holder shank 81 is insertable into the mounting portion 7 of the bore 5 via the entrance opening at the front end 2a of the spindle 2. The head portion 9 of the drawbar is received in an engagement bore 82 in the tool holder shank 81 and a tubular wall 83 of the tool holder shank is received in a space between the head portion 9 and an inner surface of the bore 5. In the illustrated embodiments, the mounting portion 7 of the bore 5 is conically shaped and has a somewhat "triangular" or polygonal, non-circular cross-sectional shape adapted to receive a similarly shaped tool holder shank 81. The conical shape ensures a connection free from play in the radial as well as the axial direction between the tool holder shank 81 and the spindle 2, whereas the non-circular cross-section ensures a non-rotatable fixation of the tool holder shank 81 to the spindle 2. However, the mounting portion 7 of the bore 5 could also have any other suitable shape for receiving other types of tool holder shanks.

Engagement members 20 in the form of segments are arranged around the drawbar 8 at a front end thereof. Under the effect of a movement of the drawbar 8 from the advanced releasing position to the retracted locking position, the engagement members 20 are moveable from a first position (see Figs 3a and 6), in which the engagement members 20 allow the tool holder shank 81 to move into and out of the mounting portion of the bore 5, to a second position (see Figs 3b, 3c and 5), in which the engagement members 20 are in locking engagement with an engagement groove 84 in the engagement bore 82 in the tool holder shank 81 and thereby keep the tool holder shank 81 secured to the spindle 2.

In the illustrated embodiment, the engagement members 20 are arranged around the neck portion 10 of the drawbar 8 and held in place around the neck portion by means of a retainer ring 21 (see Fig 6) and an elastic O-ring 22, which are arranged in the bore 5 and surround the neck portion 10. Each engagement member 20 has an outwardly facing flange portion 23 engaged in an inner groove in the retainer ring 21. The O-ring 22 is received in an outwardly facing groove at the rear end of each engagement member 20. A compression spring 24, a thrust ring 25 and a stop ring 26 are also arranged in the bore 5 and configured to surround the drawbar 8. The compression spring 24 is mounted between a shoulder on the drawbar 8 and the thrust ring 25 and it is configured to urge the thrust ring 25, the retainer ring 21 and the engagement members 20 forwards. The forward movement of the retainer ring 21 towards the entrance opening of the bore 5 is limited by the stop ring 26, which is mounted in a groove in an inner surface of the bore 5.

At its front end, each engagement member 20 is provided with an outwardly directed engagement flange 27, which is configured to be in engagement with the engagement groove 84 in the tool holder shank 81 when the engagement member 20 is in the above-mentioned second position. When the drawbar 8 is in the advanced releasing position, the front ends of the engagement members 20 are located behind the head portion 9 of the drawbar 8 and the engagement flanges 27 are out of engagement with the engagement groove 84 in the tool holder shank 81, as illustrated in Figs 3a and 6. When the drawbar 8 is moved axially rearwards in the bore 5 along the longitudinal axis L thereof, the bevelled surface 11 on the head portion 9 of the drawbar will come into contact with the front ends of the engagement members 20, wherein the front ends of the engagement members 20 will slide on this bevelled surface 11 and be pressed outwards so that the engagement flanges 27 on the engagement members come into engagement with the engagement groove 84 in the tool holder shank 81, whereupon the tool holder shank 81 will be pulled by the drawbar 8 into firm contact with inner surfaces of the spindle 2 within the mounting portion of the bore 5.

The clamping device 1 further comprises an actuating member 13, which is concentric with the spindle 2 and slidably mounted to the spindle so as to be axially moveable in relation to the spindle 2 along the longitudinal axis L. The actuating member 13 is non-rotatably mounted to the spindle 2, i.e. prevented from rotating in relation to the spindle 2, and consequently configured to rotate together with the spindle 2. A motion transferring mechanism 30 is mounted to the spindle 2 and configured to transfer an axial movement of the actuating member 13 in a first axial direction D1 in relation to the spindle 2 into a movement of the drawbar 8 from the advanced releasing position to the retracted locking position. In the illustrated embodiment, this first axial direction D1 is a direction towards the front end 2a of the spindle 2. Thus, in this case a movement of the drawbar 8 from the advanced releasing position to the retracted locking position is effected by an axial movement of the actuating member 13 forwards along the spindle 2. However, as an alternative, the actuating member 13 and the motion transferring mechanism 30 could be arranged to co-operate in such a manner that a movement of the drawbar 8 from the advanced releasing position to the retracted locking position is effected by an axial movement of the actuating member 13 rearwards along the spindle 2.

Furthermore, the clamping device 1 comprises a hydraulic actuator 17 for moving the actuating member 13 axially in relation to the spindle 2. The hydraulic actuator 17 is arranged in the housing 3 and comprises a cylinder housing 60 and a piston member 70. The cylinder housing 60 is configured to surround a part of the spindle 2. The cylinder housing 60 is slidably mounted in a space inside the housing 3 so as to be moveable axially in relation to the housing 3 and the spindle 2 between a first end position (see Fig 3a), in which the cylinder housing 60 abuts against a first shoulder 61a on the spindle 2 that limits the movement of the cylinder housing 60 in relation to the spindle 2 in the first axial direction D1, and a second end position (see Fig 3b), in which the cylinder housing 60 abuts against a second shoulder 61b on the spindle 2 that limits the movement of the cylinder housing 60 in relation to the spindle 2 in an opposite second axial direction D2. The cylinder housing 60 is preferably configured to be out of contact with spindle 2 when assuming an intermediate axial position between said first and second end positions, as illustrated in Fig 3c.

In the illustrated embodiment, an internal protuberance 62 is provided on an inner side of the cylinder housing 60, wherein the cylinder housing 60 is configured to abut against the first shoulder 61a on the spindle 2 via this internal protuberance 62 in the first end position and to abut against the second shoulder 61b on the spindle 2 via this internal protuberance 62 in the second end position. Thus, in this case, the internal protuberance 62 is configured to function as an abutment member, through which the cylinder housing 60 abuts against the respective shoulder 61a, 61b on the spindle in said end positions. The internal protuberance 62 is received with play in a gap formed between the first and second shoulders 61a, 61b on the spindle 2 to thereby allow the cylinder housing to be out of contact with the spindle 2 when assuming an intermediate axial position between the first and second end positions. In the illustrated example, the internal protuberance 62 has the form of a lock ring that is mounted in an annular groove provided in the cylinder housing 60, but it may as an alternative be formed as an integrated part of the cylinder housing. In the illustrated embodiment, the first and second shoulders 61a, 61b on the spindle are formed by mutually opposite surfaces in an annular groove provided on the outer side of the spindle 2. However, the first and second shoulders 61a, 61b on the spindle and the associated abutment member 62 on the cylinder housing could also be designed in any other suitable manner.

Also the piston member 70 is configured to surround a part of the spindle 2. The piston member 70 is slidably mounted to the cylinder housing 60 so as to be hydraulically moveable axially in relation to the spindle 2 in order to allow the piston member 70 to exert a pulling or pushing force on the actuating member 13 in the first axial direction D1 and thereby effect a movement of the drawbar 8 from the advanced releasing position to the retracted locking position. In the illustrated embodiment, the piston member 70 is configured to move the actuating member 13 in the first axial direction D1 by exerting an axially directed pulling force on it. As an alternative, the piston member 70 could be configured to move the actuating member 13 in the first axial direction D1 by exerting an axially directed pushing force on it. The piston member 70 comprises an annular piston head 71 slidably received in a space in the cylinder housing 60, wherein a first hydraulic chamber 63a is formed in this space on a first side of the piston head 71. The cylinder housing 60 is moveable into the second end position and the piston member 70 is moveable in the first axial direction D1 by feeding of hydraulic fluid into this first hydraulic chamber 63a.

In the illustrated embodiment, the cylinder housing 60 comprises a first cylindrical wall 64 that limits said space in the cylinder housing in radial direction outwards and an opposite second cylindrical wall 65 that limits said space in the cylinder housing in radial direction inwards. In the illustrated example, the cylinder housing 60 is formed by a first cylinder housing part 60a and a second cylinder housing part 60b (see Fig 6), which may be fixed to each other by means of a threaded joint 66 or in any other suitable manner, wherein the first cylindrical wall 64 forms part of the first cylinder housing part 60a and the second cylindrical wall 65 forms part of the second cylinder housing part 60b. Sealing rings 72a, 72b are arranged on opposite sides of the piston head 71, wherein a first sealing ring 72a is mounted in a groove in an outwardly facing surface on the piston head so as to be in sealing contact with the first cylindrical wall 64 and a second sealing ring 72b is mounted in a groove in an inwardly facing surface on the piston head so as to be in sealing contact with the second cylindrical wall 65. The cylinder housing 60 may of course also be designed in any other suitable manner.

In the illustrated embodiment, a second hydraulic chamber 63b is formed in the above-mentioned space in the cylinder housing 60 on an opposite second side of the piston head 71, wherein the cylinder housing 60 is moveable into the first end position and the piston member 70 is moveable in the second axial direction D2 by feeding of hydraulic fluid into this second hydraulic chamber 63b in order to allow the piston member 70 to exert a pulling or pushing force on the actuating member 13 in the second axial direction D2. In the illustrated embodiment, the piston member 70 is configured to move the actuating member 13 in the second axial direction D2 by exerting an axially directed pushing force on it. As an alternative, the piston member 70 could be configured to move the actuating member 13 in the second axial direction D2 by exerting an axially directed pulling force on it.

In the illustrated embodiment, the piston member 70 comprises a sleeve-shaped piston stem 73 fixed to the piston head 71, wherein the piston member 70 is configured to exert the above-mentioned pulling or pushing force on the actuating member 13 through the piston stem 73. The piston stem 73 is preferably concentric with the actuating member 13 and extends around the spindle 2. The piston stem 73 delimits the first hydraulic chamber 63a in radial direction inwards, whereas the second hydraulic chamber 63b is delimited in radial direction inwards by the above-mentioned second cylindrical wall 65. In the illustrated example, the second cylindrical wall 65 extends into a gap provided between the inner surface of the piston stem 73 and the outer surface of the actuating member 13.

The piston stem 73 may be configured to exert the above-mentioned force on the actuating member 13 by acting on an annular external protuberance 15 and a lock ring 16 provided on the outer side of the actuating member 13, wherein the external protuberance 15 and the lock ring 16 are spaced apart in the axial direction of the actuating member 13. In the illustrated embodiment, an annular internal protuberance 74 is provided on the inner side of the piston stem 73. The internal protuberance 74 on the piston stem 73 is received with play in a gap formed between the external protuberance 15 and the lock ring 16. In this case, axial force is transferred from the piston member 70 to the actuating member 13 via the internal protuberance 74 and the external protuberance 15 when the piston member 70 moves the actuating member in the first axial direction D1 and via the external protuberance 74 and the lock ring 16 when the piston member 70 moves the actuating member in the second axial direction D2. The piston member 70 and the interface between the piston member and the actuating member 13 may of course also be designed in any other suitable manner.

The actuating member 13 is rotatable in relation to the cylinder housing 60 and the piston member 70 together with the spindle 2, whereas the cylinder housing 60 and the piston member 70 are configured to remain stationary in the housing 3 when the spindle 2 is rotated in relation to the housing 3.

The cylinder housing 60 and the piston member 70 are preferably concentric with the actuating member 13 and the spindle 2, but it would also be possible to use a cylinder housing 60 and a piston member 70 which have its respective centre axis arranged parallel to the centre axis of the spindle 2 but somewhat eccentrically in relation to it. In order to save space in the longitudinal direction of the clamping device 1, the cylinder housing 60 and the piston member 70 are with advantage arranged to overlap the actuating member 13, at least partly.

The actuating member 13 is preferably configured to assume a self-locking axial position on the spindle 2 when the drawbar 8 has been forced into the retracted locking position under the effect of the actuating member 13 and the motion transferring mechanism 30, so as to thereby allow the actuating member 13 to keep the drawbar 8 in the retracted locking position. Hereby, the piston member 70 only needs to exert a force on the actuating member 13 in connection with a tool changing operation when the spindle 2 is stationary and the drawbar 8 is to be moved from the retracted locking position to the advanced releasing position and then back to the retracted locking position. In the self-locking axial position, frictional forces between the actuating member 13 and parts of the motion transferring mechanism 30 and/or the spindle 2 that are in contact with the actuating member 13 prevent the actuating member from being axially displaced in the second axial direction D2.

It is important to avoid frictional forces between the actuating member 13 and the piston member 70 and between the spindle 2 and the cylinder housing 60 during the machining operations or at least keep such frictional forces as low as possible, due to the fact that the actuating member 13 rotates together with the spindle 2 at high speed during machining operations, whereas the piston member 70 and the cylinder housing 60 remain stationary. In the illustrated embodiment, frictional forces at the interface between the piston member 70 and the actuating member 13 are avoided by having a small play in radial and axial direction between the actuating member and the piston member at the coupling formed by the above-mentioned co-operating parts 15, 16, 74 of the actuating member and the piston member. In a corresponding manner, frictional forces at the interface between the cylinder housing 60 and the spindle 2 are avoided by having a small play in radial and axial direction between the cylinder housing and the spindle at the coupling formed by the above-mentioned co-operating parts 62, 61a, 61b of the cylinder housing and the spindle.

The clamping device 1 is with advantage provided with a spring-loaded return mechanism 90 acting on the cylinder housing 60, wherein:
- the cylinder housing 60 is moveable from the above-mentioned intermediate axial position to the first end position against the action of a spring force of the return mechanism 90 and from the first end position to the intermediate axial position under the action of this spring force; and
- the cylinder housing 60 is moveable from the intermediate axial position to the second end position against the action of a spring force of the return mechanism 90 and from the second end position to the intermediate axial position under the action of this spring force.

In the illustrated embodiment, the return mechanism 90 comprises two or more balls 91 distributed in the circumferential direction of the cylinder housing 60, wherein these balls are received in an annular groove 92 on the outer side of the cylinder housing. The groove 92 has a cross-sectional shape that is so adapted to the shape of the balls 91 that the mutually opposite side walls in the groove 92 will guide the balls towards a central position in the groove. Each ball 91 extends through a respective aperture 93 (see Fig 3a) in the housing 3 of the clamping device 1, wherein this aperture 93 opens into an associated cavity 94 in the housing. A spring unit 95 is accommodated in this cavity 94 and the ball 91 rests against this spring unit 95, which is configured to act on the ball 91 in order to urge the ball radially inwards into the annular groove 92. In the illustrated example, each spring unit 95 comprises a compression spring element formed by a stack of Belleville washers. The spring-loaded return mechanism 90 may also be designed in any other suitable manner.

In the illustrated embodiment, the actuating member 13 has the form of a sleeve. In this case, the actuating member 13 is arranged around a peripheral wall 14 of the spindle 2 and slidably mounted to this peripheral wall so as to be axially moveable in relation to the spindle.

The motion transferring mechanism 30 may be designed in many different manners. It may for instance comprise one or more first wedges 40 for transferring an axial movement of the actuating member 13 in the first axial direction D1 in relation to the spindle 2 into a movement of the drawbar 8 from the advanced releasing position to the retracted locking position, and one or more second wedges 50 for transferring an axial movement of the actuating member 13 in the second axial direction D2 in relation to the spindle 2 into a movement of the drawbar 8 from the retracted locking position to the advanced releasing position.

In the illustrated embodiment, the motion transferring mechanism 30 comprises three first wedges 40, which are spaced apart in the circumferential direction of the peripheral wall 14. Each first wedge 40 is slidably received in a respective first aperture 45 that extends radially through the peripheral wall 14. The first wedges 40 are configured to jointly press the drawbar 8 towards the retracted locking position when they are pressed radially inwards in the associated first apertures 45.

Each first wedge 40 comprises a first pressure receiving surface 41 which faces outwards from the peripheral wall 14 of the spindle 2, and the actuating member 13 is on its inner side provided with first pressure applying surfaces 31 which face inwards for contacting the first pressure receiving surfaces 41 on the first wedges. Each first pressure applying surface 31 has a radial distance to the longitudinal axis L that increases as seen in the first axial direction D1. The first pressure applying surfaces 31 are configured to press the first wedges 40 radially inwards in the first apertures 45 by pressing against the first pressure receiving surfaces 41 on the first wedges when the actuating member 13 is moved in the first axial direction D1. The first pressure applying surfaces 31 and the first pressure receiving surfaces 41 are preferably inclined in relation to the longitudinal axis L by such an angle α (see Fig 5) that the first wedges 40 will keep the actuating member 13 in a self-locking axial position on the peripheral wall 14 when the drawbar 8 has been forced into the retracted locking position under the effect of the actuating member 13 and the first wedges 40.

Each first wedge 40 also comprises a wedge surface 48, which faces towards the rear end 2b of the spindle 2 and which is in contact with a first slide surface 18 on the drawbar 8 facing towards the front end 2a of the housing. When the first wedges 40 are pressed radially inwards in the first apertures 45 by the actuating member 13, the wedge surface 48 of each first wedge 40 will slide and press against the corresponding first slide surface 18 on the drawbar and thereby force the drawbar 8 to move towards the retracted locking position.

In the illustrated embodiment, the clamping device 1 comprises three second wedges 50, which are spaced apart in the circumferential direction of the peripheral wall 14. Each second wedge 50 is slidably received in a respective second aperture 55 that extends radially through the peripheral wall 14. The second wedges 50 are configured to jointly press the drawbar 8 towards the advanced releasing position when they are pressed radially inwards in the associated second apertures 55.

Each second wedge 50 comprises a second pressure receiving surface 52 which faces outwards from the peripheral wall 14 of the spindle 2, and the actuating member 13 is on its inner side provided with second pressure applying surfaces 32 which face inwards for contacting the second pressure receiving surfaces 52 on the second wedges. Each second pressure applying surface 32 has a radial distance to the longitudinal axis L that increases as seen in the second axial direction D2. The second pressure applying surfaces 32 are configured to press the second wedges 50 radially inwards in the second apertures 55 by pressing against the second pressure receiving surfaces 52 on the second wedges when the actuating member 13 is moved in the second axial direction D2.

Each second wedge 50 also comprises a wedge surface 59, which faces towards the front end 2a of the spindle 2 and which is in contact with a second slide surface 19 on the drawbar 8 facing towards the rear end 2b of the housing. When the second wedges 50 are pressed radially inwards in the second apertures 55 by the actuating member 13, the wedge surface 59 of each second wedge 50 will slide and press against the corresponding second slide surface 19 on the drawbar and thereby force the drawbar 8 to move towards the advanced locking position.

Each first wedge 40 may also comprise a third pressure receiving surface 43 (see Fig 6) which faces outwards from the peripheral wall 14 of the spindle 2, wherein the actuating member 13 on its inner side is provided with third pressure applying surfaces 33 which face inwards for contacting the third pressure receiving surfaces 43 on each first wedge. Each third pressure applying surface 33 has a radial distance to the longitudinal axis L that increases as seen in the first axial direction D1. The third pressure applying surfaces 33 and the third pressure receiving surfaces 43 are inclined in relation to the longitudinal axis L by an angle β (see Fig 6) which is larger than the above-mentioned angle α. The first and third pressure applying surfaces 31, 33 and the first and third pressure receiving surfaces 41, 43 are arranged consecutively on the actuating member 13 and on each first wedge 40, respectively, such that, upon a movement of the actuating member 13 in the first axial direction D1, the third pressure applying surfaces 33 are configured to slide and press against the associated third pressure receiving surfaces 43 during an initial first phase of the movement, whereupon the first pressure applying surfaces 31 are configured to slide and press against the associated first pressure receiving surfaces 41 during a subsequent second phase of the movement. Hereby, the drawbar 8 may be quickly moved in the first axial direction D1 during the initial phase of the clamping under the effect of the larger angle β. This initial clamping phase does not require much force. However, during the final phase of the clamping, a great force is required for displacing the drawbar 8 a short distance. When the actual clamping occurs, i.e. when the engagement members 20 assume the above-mentioned first position, the drawbar 8 is moved in the first axial direction D1 under the effect of the smaller angle α such that the axial movement of the drawbar 8 will be small as compared to the axial movement of the actuating member 13, which results in a force-amplifying effect, also referred to as "power boost". The angle β is suitably between 10° and 75°, preferably between 35° and 65°, which provides an efficient initial axial movement of the drawbar 8. By using a steep angle β for the initial axial movement of the drawbar 8 and a small angle α for the actual clamping, the actuating member 13 (and thus the entire clamping device 1) can be made relatively short in the axial direction while still providing a self-locking clamping mechanism with a significant force-amplifying effect.

The first and second wedges 40, 50 are non-rotatably received in the associated first and second apertures 45, 55 in the peripheral wall 14 of the spindle 2, i.e. each wedge is prevented from rotating in the associated aperture.

When a tool holder 80 is to be clamped to the spindle 2, the tool holder shank 81 is inserted into the mounting portion 7 of the bore 5 with the spindle 2 kept in a stationary position and the drawbar 8 positioned in the advanced releasing position, as illustrated in Fig 6. Hereby, the head portion 9 of the drawbar is received in the engagement bore 82 in the tool holder shank 81 and the engagement groove 84 in the tool holder shank 81 is positioned on the outside of the engagement flanges 27 of the engagement members 20. Thereupon, hydraulic oil is fed into the first hydraulic chamber 63a in order to move the cylinder housing 60 a short distance in the second axial direction D2 into engagement with the second shoulder 61b on the spindle 2, as illustrated in Fig 3b, and move the piston member 70 in the first axial direction D1 and thereby achieve a corresponding axial movement of the actuating member 13 in the first axial direction D1. During a first phase of this axial movement of the actuating member 13, the third pressure applying surfaces 33 on the actuating member 13 will slide and press against the third pressure receiving surfaces 43 on the first wedges 40. Hereby, the first wedges 40 will be pressed radially inwards and the drawbar 8 will be axially displaced towards the retracted locking position. Due to the relatively steep inclination β of the third pressure applying and receiving surfaces 33, 43, the first wedges 40 will initially move inwards rather fast, which results in a relatively quick displacement of the drawbar 8. The relatively steep angle β is advantageous since the initial displacement of the drawbar 8 does not require much force. The first and third pressure applying surfaces 31, 33 and the first and third pressure receiving surfaces 41, 43 are so arranged that when the actuating member 13 has been moved such a distance that the third pressure applying surfaces 33 have passed the third pressure receiving surfaces 43 and the first pressure applying surfaces 31 reach the first pressure receiving surfaces 41, i.e. at the transition between these respective surfaces, the drawbar 8 has almost reached its final retracted position in the bore 5. Hence, for the final clamping phase, in which a large force is beneficial, the first pressure applying and receiving surfaces 31, 41 are active. In this phase, a relatively large movement of the actuating member 13 will result in a very small radial displacement of the first wedges 40, and an even smaller axial displacement of the drawbar 8, which consequently will provide a force amplifying effect that will make it possible for the drawbar 8 to pull the tool holder shank 81 with a large force into firm engagement with the spindle 2. Furthermore, the small inclination α of the first pressure applying and receiving surfaces 31, 41 will provide a self-locking effect and make sure that the clamping device will remain in the clamped state without requiring any additional locking means. Hereby, the hydraulic pressure in the first hydraulic chamber 63a may be released when the drawbar 8 has reached the retracted locking position. When the hydraulic pressure in the first hydraulic chamber 63a is released, the return mechanism 90 will automatically move the cylinder housing 60 a short distance in the first axial direction D1 and return it to the intermediate axial position illustrated in Fig 3c, which implies that the cylinder housing is moved out of contact with the spindle 2. During the movement of the drawbar 8 towards the retracted locking position, the second slide surfaces 19 on the drawbar 8 are pressed against the wedge surfaces 59 on the second wedges 50 and will thereby press the second wedges 50 radially outwards.

When a tool changing operation is to be performed and the tool holder 80 is to be released from the spindle 2, the rotation of the spindle 2 is stopped and hydraulic oil is fed into the second hydraulic chamber 63b in order to move the cylinder housing 60 a short distance in the first axial direction D1 into engagement with the first shoulder 61a on the spindle 2, as illustrated in Fig 3a, and move the piston member 70 in the second axial direction D2 and thereby achieve a corresponding axial movement of the actuating member 13 in the second axial direction D2. When the actuating member 13 is subjected to a sufficient force in the second axial direction D2, the self-locking frictional engagement between the first pressure applying surfaces 31 on the actuating member 13 and the first pressure receiving surfaces 41 on the first wedges 40 will be released, whereupon the actuating member 13 is moveable in relation to the spindle 2 in the second axial direction D2. When the actuating member 13 is moved in this direction, the second pressure applying surfaces 32 on the actuating member 13 will slide and press against the second pressure receiving surfaces 52 on the second wedges 50. Hereby, the second wedges 50 will be pressed radially inwards and the drawbar 8 will be axially displaced towards the advanced releasing position. When the drawbar 8 is moved towards the advanced releasing position, the outer end of the head portion 9 of the drawbar 8 will hit against a surface 85 in the engagement bore 82 in the tool holder shank 81 and thereby release the tool holder shank 81 from the spindle 2. During the movement of the drawbar 8 towards the advanced releasing position, the first slide surfaces 18 on the drawbar 8 are pressed against the wedge surfaces 48 on the first wedges 40 and will thereby press the first wedges 40 radially outwards.

## Claims

1. A clamping device for releasably holding a tool holder shank, the clamping device (1) comprising:
- a housing (3);
- a spindle (2) rotatably mounted inside the housing (3) and having a front end (2a), a rear end (2b) and a bore (5) which intersects the front end (2a) and extends rearwardly therefrom, wherein a mounting portion (7) for receiving the tool holder shank (81) is provided at a front end of the bore (5);
- a drawbar (8) slidably mounted inside the bore (5) so as to be reciprocally moveable in the bore along a longitudinal axis (L) thereof between an advanced releasing position and a retracted locking position;
- engagement members (20) arranged around the drawbar (8) at a front end thereof, wherein the engagement members (20), under the effect of a movement of the drawbar (8) from the advanced releasing position to the retracted locking position, are moveable from a first position, in which the engagement members (20) allow the tool holder shank (81) to move into and out of said mounting portion (7) of the bore (5), to a second position, in which the engagement members (20) are in locking engagement with the tool holder shank (81) and keep it secured to the spindle (2);
- an actuating member (13) arranged inside the housing (3), wherein the actuating member (13) is slidably mounted to the spindle (2) so as to be moveable in relation to the spindle (2) in the axial direction thereof; and
- a motion transferring mechanism (30) arranged inside the housing (3), wherein the motion transferring mechanism (30) is mounted to the spindle (2) and configured to transfer an axial movement of the actuating member (13) in a first axial direction (D1) in relation to the spindle (2) into a movement of the drawbar (8) from the advanced releasing position to the retracted locking position,
wherein:
- the clamping device (1) comprises a hydraulic actuator (17) for moving the actuating member (13) axially in relation to the spindle (2), wherein the hydraulic actuator (17) is arranged in the housing (3) and comprises a cylinder housing (60) and a piston member (70);
- the piston member (70) extends around the spindle (2) and is slidably mounted to the cylinder housing (60) so as to be hydraulically moveable axially in relation to the spindle (2) in order to allow the piston member (70) to exert a pulling or pushing force on the actuating member (13) in the first axial direction (D1) and thereby effect a movement of the drawbar (8) from the advanced releasing position to the retracted locking position;
- the piston member (70) comprises an annular piston head (71) slidably received in a space in the cylinder housing (60), wherein a first hydraulic chamber (63a) is formed in this space on a first side of the piston head (71), the cylinder housing (60) being moveable into the second end position and the piston member (70) being moveable in the first axial direction (D1) by feeding of hydraulic fluid into this first hydraulic chamber (63a); and
- that the actuating member (13) is rotatable in relation to the cylinder housing (60) and the piston member (70) together with the spindle (2); **characterized in:**
- **that** the cylinder housing (60) extends around the spindle (2) and is slidably mounted inside the housing (3) so as to be moveable axially in relation to the spindle (2) between a first end position, in which the cylinder housing (60) abuts against a first shoulder (61a) on the spindle (2) that limits the movement of the cylinder housing (60) in relation to the spindle (2) in said first axial direction (D1), and a second end position, in which the cylinder housing (60) abuts against a second shoulder (61b) on the spindle (2) that limits the movement of the cylinder housing (60) in relation to the spindle (2) in an opposite second axial direction (D2).

2. A clamping device according to 1, **characterized in that** the actuating member (13) is configured to assume a self-locking axial position on the spindle (2) when the drawbar (8) has been forced into the retracted locking position under the effect of the actuating member (13) and the motion transferring mechanism (30), so as to thereby keep the drawbar (8) in the retracted locking position.

3. A clamping device according to claim 1 or 2, **characterized in that** a second hydraulic chamber (63b) is formed in said space in the cylinder housing (60) on an opposite second side of the piston head (71), the cylinder housing (60) being moveable into the first end position and the piston member (70) being moveable in the second axial direction (D2) by feeding of hydraulic fluid into this second hydraulic chamber (63b) in order to allow the piston member (70) to exert a pulling or pushing force on the actuating member (13) in the second axial direction (D2).

4. A clamping device according to any of claims 1-3, **characterized in that** the cylinder housing (60) comprises a first cylindrical wall (64) that limits said space in the cylinder housing in radial direction outwards and an opposite second cylindrical wall (65) that limits said space in the cylinder housing in radial direction inwards.

5. A clamping device according to any of claims 1-4, **characterized in:**
- **that** an internal protuberance (62) is provided on an inner side of the cylinder housing (60), wherein the cylinder housing (60) is configured to abut against the first shoulder (61a) on the spindle (2) via this internal protuberance (62) in said first end position and to abut against the second shoulder (61b) on the spindle (2) via this internal protuberance (62) in said second end position; and
- **that** the internal protuberance (62) on the cylinder housing (60) is received with play in a gap formed between the first and second shoulders (61a, 61b) on the spindle (2).

6. A clamping device according to any of claims 1-5, **characterized in that** the cylinder housing (60) is configured to be out of contact with the spindle (2) when assuming an intermediate axial position between said first and second end positions.

7. A clamping device according to claim 6, **characterized in that** the clamping device (1) comprises a spring-loaded return mechanism (90) that is configured to act on the cylinder housing (60), wherein:
- the cylinder housing (60) is moveable from said intermediate axial position to the first end position against the action of a spring force of the return mechanism (90) and from the first end position to the intermediate axial position under the action of this spring force; and
- the cylinder housing (60) is moveable from said intermediate axial position to the second end position against the action of a spring force of the return mechanism (90) and from the second end position to the intermediate axial position under the action of this spring force.

8. A clamping device according to any of claims 1-7, **characterized in that** the piston member (70) comprises a sleeve-shaped piston stem (73) that is fixed to the piston head (71), wherein the piston member (70) is configured to exert said pulling or pushing force on the actuating member (13) through the piston stem (73).

9. A clamping device according to claim 8, **characterized in that** the piston stem (73) is configured to delimit the first hydraulic chamber (63a) in radial direction inwards.

10. A clamping device according to any of claims 1-9, **characterized in that** the actuating member (13) has the form of a sleeve, wherein the actuating member (13) is arranged around a peripheral wall (14) of the spindle (2) and slidably mounted to this peripheral wall so as to be axially moveable in relation to the spindle.

11. A clamping device according to claim 10, **characterized in:**
- **that** the motion transferring mechanism (30) comprises a first wedge (40) slidably received in a first aperture (45) that extends radially through the peripheral wall (14) of the spindle (2), wherein the first wedge (40) is configured to press the drawbar (8) towards the retracted locking position when it is pressed radially inwards in the first aperture (45);
- **that** the first wedge (40) comprises a first pressure receiving surface (41) that faces outwards from the spindle (2);
- **that** the actuating member (13) on its inner side is provided with a first pressure applying surface (31), which faces inwards for contacting the first pressure receiving surface (41) and has a radial distance to the longitudinal axis (L) that increases as seen in the first axial direction (D1); and
- **that** the first pressure applying surface (31) is configured to press the first wedge (40) radially inwards in the first aperture (45) by pressing against the first pressure receiving surface (41) when the actuating member (13) is moved in the first axial direction (D1), the first pressure applying surface (31) and the first pressure receiving surface (41) preferably being inclined in relation to the longitudinal axis (L) by such an angle α that the first wedge (40) will keep the actuating member (13) in a self-locking axial position on the peripheral wall (14) when the drawbar (8) has been forced into the retracted locking position under the effect of the actuating member (13) and the first wedge (40).

12. A clamping device according to claim 11, **characterized in that** the first wedge (40) comprises a wedge surface (48), which faces towards the rear end (2b) of the spindle (2) and is in contact with a first slide surface (18) on the drawbar facing towards the front end (2a) of the spindle.

13. A clamping device according to claim 12, **characterized in:**
- **that** the motion transferring mechanism (30) comprises a second wedge (50) slidably received in a second aperture (55) that extends radially through the peripheral wall (14) of the spindle (2), wherein the second wedge (50) comprises a wedge surface (59), which faces towards the front end (2a) of the spindle (2) and is in contact with a second slide surface (19) on the drawbar facing towards the rear end (2b) of the spindle, and a second pressure receiving surface (52), which faces outwards from the spindle (2), the second wedge (50) being configured to press the drawbar (8) towards the advanced releasing position when it is pressed radially inwards in the second aperture (55);
- **that** the actuating member (13) on its inner side is provided with a second pressure applying surface (32), which faces inwards for contacting the second pressure receiving surface (52) and has a radial distance to the longitudinal axis (L) that increases as seen in the second axial direction (D2); and
- **that** the second pressure applying surface (32) is configured to press the second wedge (50) radially inwards in the second aperture (55) by pressing against the second pressure receiving surface (52) when the actuating member (13) is moved in the second axial direction (D2).

14. A clamping device according to claim 13, **characterized in that** the clamping device (1) comprises two or more, preferably three, such second wedges (50) spaced apart in the circumferential direction of the peripheral wall (14), each second wedge (50) being received in a respective second aperture (55) that extends radially through the peripheral wall (14).

15. A clamping device according to any of claims 11-14, **characterized in that** the clamping device (1) comprises two or more, preferably three, such first wedges (40) spaced apart in the circumferential direction of the peripheral wall (14), each first wedge (40) being received in a respective first aperture (45) that extends radially through the peripheral wall (14).

## Patentansprüche

1. Spannvorrichtung zum lösbaren Halten eines Werkzeughalterschaftes, wobei die Spannvorrichtung (1) folgendes aufweist:
- ein Gehäuse (3),
- eine Spindel (2), die innerhalb des Gehäuses (3) rotierbar montiert ist und ein vorderes Ende (2a), ein hinteres Ende (2b) und eine Bohrung (5) aufweist, die das vordere Ende (2a) schneidet und sich von dort aus nach hinten erstreckt, wobei an einem vorderen Ende der Bohrung (5) ein Montageabschnitt (7) zur Aufnahme des Werkzeughalterschafts (81) bereitgestellt ist,
- eine Zugstange (8), die innerhalb der Bohrung (5) verschiebbar angebracht ist, so dass sie in der Bohrung entlang einer Längsachse (L) derselben zwischen einer vorgerückten Freigabeposition und einer zurückgerückten Feststellposition hin- und herbewegbar ist,
- Eingriffselemente (20), die um die Zugstange (8) an einem vorderen Ende derselben angeordnet sind, wobei die Eingriffselemente (20) von der vorgerückten Freigabeposition in die zurückgerückte Feststellposition durch eine Bewegung der Zugstange (8) aus einer ersten Position, in der die Eingriffselemente (20) es dem Werkzeughalterschaft (81) ermöglichen, sich in den Befestigungsabschnitt (7) der Bohrung (5) hinein und aus ihm heraus zu bewegen, in eine zweite Position, in der die Eingriffselemente (20) in feststehendem Eingriff mit dem Werkzeughalterschaft (81) stehen und ihn an der Spindel (2) halten, bewegbar sind,
- ein Betätigungselement (13), das innerhalb des Gehäuses (3) angeordnet ist, wobei das Betätigungselement (13) verschiebbar an der Spindel (2) angebracht ist, so dass es in Bezug auf die Spindel (2) in deren axialer Richtung bewegbar ist, und
- einen Bewegungsübertragungsmechanismus (30), der innerhalb des Gehäuses (3) angeordnet ist, wobei der Bewegungsübertragungsmechanismus (30) an der Spindel (2) angebracht und eingerichtet ist, um eine axiale Bewegung des Betätigungselements (13) in einer ersten axialen Richtung (D1) in Bezug auf die Spindel (2) in eine Bewegung der Zugstange (8) von der vorgerückten Freigabeposition zu der zurückgerückten Feststellposition zu übertragen,
wobei:
- die Spannvorrichtung (1) einen hydraulischen Aktor (17) zum axialen Bewegen des Betätigungselements (13) gegenüber der Spindel (2) aufweist, wobei der hydraulische Aktor (17) im Gehäuse (3) angeordnet ist und ein Zylindergehäuse (60) und ein Kolbenelement (70) aufweist,
- das Kolbenelement (70) sich um die Spindel (2) herum erstreckt und verschiebbar an dem Zylindergehäuse (60) angebracht ist, so dass es hydraulisch axial in Bezug auf die Spindel (2) beweglich ist, um es dem Kolbenelement (70) zu ermöglichen, eine Zug- oder Druckkraft auf das Betätigungselement (13) in der ersten axialen Richtung (D1) auszuüben und dadurch eine Bewegung der Zugstange (8) von der vorgerückten Freigabeposition in die zurückgerückte Feststellposition zu bewirken,
- das Kolbenelement (70) einen ringförmigen Kolbenkopf (71) aufweist, der in einem Raum in dem Zylindergehäuse (60) verschiebbar aufgenommen ist, wobei eine erste Hydraulikkammer (63a) in diesem Raum auf einer ersten Seite des Kolbenkopfes (71) ausgebildet ist, wobei das Zylindergehäuse (60) in die zweite Endposition bewegbar ist und das Kolbenelement (70) in der ersten axialen Richtung (D1) durch Zuführen von Hydraulikflüssigkeit in diese erste Hydraulickammer (63a) bewegbar ist, und
- dass das Betätigungselement (13) in Bezug auf das Zylindergehäuse (60) und das Kolbenelement (70) zusammen mit der Spindel (2) rotierbar ist, **dadurch gekennzeichnet**
- **dass** sich das Zylindergehäuse (60) um die Spindel (2) herum erstreckt und innerhalb des Gehäuses (3) verschiebbar angebracht ist, so dass es in Bezug auf die Spindel (2) axial zwischen einer ersten Endposition, in der das Zylindergehäuse (60) an einer ersten Schulter (61a) an der Spindel (2) anliegt, die die Bewegung des Zylindergehäuses (60) in Bezug auf die Spindel (2) in der ersten axialen Richtung (D1) begrenzt, und einer zweiten Endposition, in der das Zylindergehäuse (60) an einer zweiten Schulter (61b) an der Spindel (2) anliegt, die die Bewegung des Zylindergehäuses (60) in Bezug auf die Spindel (2) in einer entgegengesetzten zweiten axialen Richtung (D2) begrenzt, bewegbar ist.

2. Spannvorrichtung nach Anspruch 1, **dadurch gekennzeichnet, dass** das Betätigungselement (13) so eingerichtet ist, dass es eine selbstfeststellende axiale Position auf der Spindel (2) einnimmt, wenn die Zugstange (8) durch die Wirkung des Betätigungselements (13) und des Bewegungsübertragungsmechanismus (30) in die zurückgerückte Feststellposition gebracht worden ist, um dadurch die Zugstange (8) in der zurückgerückten Feststellposition zu halten.

3. Spannvorrichtung nach Anspruch 1 oder 2, **dadurch gekennzeichnet, dass** eine zweite Hydraulikkammer (63b) in dem Raum in dem Zylindergehäuse (60) auf einer gegenüberliegenden zweiten Seite des Kolbenkopfes (71) ausgebildet ist, wobei das Zylindergehäuse (60) in die erste Endposition bewegbar ist und das Kolbenelement (70) in die zweite axiale Richtung (D2) durch Zuführen von Hydraulikflüssigkeit in diese zweite Hydraulikkammer (63b) bewegbar ist, um dem Kolbenelement (70) zu ermöglichen, eine Zug- oder Druckkraft auf das Betätigungselement (13) in der zweiten axialen Richtung (D2) auszuüben.

4. Spannvorrichtung nach einem der Ansprüche 1-3, **dadurch gekennzeichnet, dass** das Zylindergehäuse (60) eine erste zylindrische Wand (64) aufweist, mit der der Raum im Zylindergehäuse in radialer Richtung nach außen begrenzt wird, und eine gegenüberliegende zweite zylindrische Wand (65), mit der der Raum im Zylindergehäuse in radialer Richtung nach innen begrenzt wird.

5. Spannvorrichtung nach einem der Ansprüche 1-4, **dadurch gekennzeichnet:**
- **dass** an einer Innenseite des Zylindergehäuses (60) ein innerer Wulst (62) bereitgestellt ist, wobei das Zylindergehäuse (60) so eingerichtet ist, dass es in der ersten Endposition über diesen inneren Wulst (62) an der ersten Schulter (61a) an der Spindel (2) anliegt und in der zweiten Endposition über diesen inneren Wulst (62) an der zweiten Schulter (61b) an der Spindel (2) anliegt, und
- **dass** der innere Wulst (62) am Zylindergehäuse (60) mit Spiel in einem zwischen der ersten und zweiten Schulter (61a, 61b) an der Spindel (2) ausgebildeten Spalt aufgenommen ist.

6. Spannvorrichtung nach einem der Ansprüche 1 bis 5, **dadurch gekennzeichnet, dass** das Zylindergehäuse (60) so eingerichtet ist, dass es die Spindel (2) nicht berührt, wenn es eine axiale Zwischenposition zwischen der ersten und der zweiten Endposition einnimmt.

7. Spannvorrichtung nach Anspruch 6, **dadurch gekennzeichnet, dass** die Spannvorrichtung (1) einen federbelasteten Rückstellmechanismus (90) aufweist, der so eingerichtet ist, dass er auf das Zylindergehäuse (60) wirkt, wobei:
- das Zylindergehäuse (60) gegen die Wirkung einer Federkraft des Rückstellmechanismus (90) von der axialen Zwischenposition in die erste Endposition und unter Einwirkung dieser Federkraft von der ersten Endposition in die axiale Zwischenposition bewegbar ist, und
- das Zylindergehäuse (60) von der axialen Zwischenposition in die zweite Endposition gegen die Wirkung einer Federkraft des Rückstellmechanismus (90) und von der zweiten Endposition in die axiale Zwischenposition unter Einwirkung dieser Federkraft bewegbar ist.

8. Spannvorrichtung nach einem der Ansprüche 1-7, **dadurch gekennzeichnet, dass** das Kolbenelement (70) einen hülsenförmigen Kolbenschaft (73) aufweist, der am Kolbenkopf (71) befestigt ist, wobei das Kolbenelement (70) so eingerichtet ist, dass es über den Kolbenschaft (73) die Zug- oder Druckkraft auf das Betätigungselement (13) ausübt.

9. Spannvorrichtung nach Anspruch 8, **dadurch gekennzeichnet, dass** der Kolbenschaft (73) so eingerichtet ist, dass er die erste Hydraulikkammer (63a) in radialer Richtung nach innen begrenzt.

10. Spannvorrichtung nach einem der Ansprüche 1 bis 9, **dadurch gekennzeichnet, dass** das Betätigungselement (13) die Form einer Hülse aufweist, wobei das Betätigungselement (13) um eine Umfangswand (14) der Spindel (2) herum angeordnet und an dieser Umfangswand in Bezug auf die Spindel axial beweglich verschiebbar angebracht ist.

11. Spannvorrichtung nach Anspruch 10, **dadurch gekennzeichnet:**
- **dass** der Bewegungsübertragungsmechanismus (30) einen ersten Keil (40) aufweist, der in einer ersten Öffnung (45) verschiebbar aufgenommen ist, die sich radial durch die Umfangswand (14) der Spindel (2) erstreckt, wobei der erste Keil (40) so eingerichtet ist, dass er die Zugstange (8) in Richtung der zurückgerückten Feststellposition drückt, wenn er in der ersten Öffnung (45) radial nach innen gedrückt wird,
- **dass** der erste Keil (40) eine erste druckaufnehmende Fläche (41) aufweist, die von der Spindel (2) nach außen weist,
- **dass** das Betätigungselement (13) an seiner Innenseite eine nach innen weisende erste druckausübende Fläche (31) zur Anlage an der ersten druckaufnehmende Fläche (41) aufweist, die einen in der ersten Achsrichtung (D1) gesehen zunehmenden radialen Abstand zur Längsachse (L) aufweist, und
- **dass** die erste druckausübende Fläche (31) eingerichtet ist, um den ersten Keil (40) radial nach innen in die erste Öffnung (45) zu drücken, indem sie gegen die erste druckaufnehmende Fläche (41) drückt, wenn das Betätigungselement (13) in der ersten axialen Richtung (D1) bewegt wird, wobei die erste druckausübende Fläche (31) und die erste druckaufnehmende Fläche (41) vorzugsweise um einen solchen Winkel zur Längsachse (L) geneigt sind oder der erste Keil (40) das Betätigungselement (13) in einer selbst feststellenden axialen Position an der Umfangswand (14) hält, wenn die Zugstange (8) durch die Wirkung des Betätigungselements (13) und des ersten Keils (40) in die zurückgerückte Feststellposition gebracht worden ist.

12. Spannvorrichtung nach Anspruch 11, **dadurch gekennzeichnet, dass** der erste Keil (40) eine Keilfläche (48) aufweist, die dem hinteren Ende (2b) der Spindel (2) zugewandt ist und in Kontakt mit einer ersten Gleitfläche (18) an der Zugstange steht, die dem vorderen Ende (2a) der Spindel zugewandt ist.

13. Spannvorrichtung nach Anspruch 12, **dadurch gekennzeichnet:**
- **dass** der Bewegungsübertragungsmechanismus (30) einen zweiten Keil (50) aufweist, der in einer zweiten Öffnung (55) verschiebbar aufgenommen ist, die sich radial durch die Umfangswand (14) der Spindel (2) erstreckt, wobei der zweite Keil (50) eine Keilfläche (59) aufweist, die dem vorderen Ende (2a) der Spindel (2) zugewandt ist und in Kontakt mit einer zweiten Gleitfläche (19) an der Zugstange steht, die dem hinteren Ende (2b) der Spindel zugewandt ist, und eine zweite druckaufnehmende Fläche (52), die von der Spindel (2) nach außen weist, wobei der zweite Keil (50) so eingerichtet ist, dass er die Zugstange (8) in Richtung der vorgerückten Freigabeposition drückt, wenn sie in der zweiten Öffnung (55) radial nach innen gedrückt wird,
- **dass** das Betätigungselement (13) an seiner Innenseite eine nach innen weisende zweite druckausübende Fläche (32) für den Kontakt mit der zweiten druckaufnehmende Fläche (52) aufweist, die einen in der zweiten Achsrichtung (D2) gesehen zunehmenden radialen Abstand zur Längsachse (L) aufweist, und
- **dass** die zweite druckausübende Fläche (32) eingerichtet ist, um den zweiten Keil (50) radial nach innen in die zweite Öffnung (55) zu drücken, indem sie gegen die zweite druckaufnehmende Fläche (52) drückt, wenn das Betätigungselement (13) in der zweiten axialen Richtung (D2) bewegt wird.

14. Spannvorrichtung nach Anspruch 13, **dadurch gekennzeichnet, dass** die Spannvorrichtung (1) zwei oder mehr, vorzugsweise drei, solcher zweiter Keile (50) aufweist, die in Umfangsrichtung der Umfangswand (14) beabstandet sind, wobei jeder zweite Keil (50) in einer jeweiligen zweiten Öffnung (55) aufgenommen ist, die sich radial durch die Umfangswand (14) erstreckt.

15. Spannvorrichtung nach einem der Ansprüche 11 bis 14, **dadurch gekennzeichnet, dass** die Spannvorrichtung (1) zwei oder mehr, vorzugsweise drei, solcher ersten Keile (40) aufweist, die in Umfangsrichtung der Umfangswand (14) beabstandet sind, wobei jeder erste Keil (40) in einer jeweiligen ersten Öffnung (45) aufgenommen wird, die sich radial durch die Umfangswand (14) erstreckt.

## Revendications

1. Dispositif de serrage destiné à maintenir de manière libérable une queue de porte-outil, le dispositif de serrage (1) comprenant :
- un logement (3) ;
- une broche (2) montée avec possibilité de rotation à l'intérieur du logement (3) et présentant une extrémité avant (2a), une extrémité arrière (2b) et un alésage (5) lequel coupe l'extrémité avant (2a) et s'étend vers l'arrière depuis celle-ci, où une partie de montage (7) destinée à recevoir la queue de porte-outil (81) est prévue au niveau d'une extrémité avant de l'alésage (5) ;
- une tige de traction (8) montée avec possibilité de coulissement à l'intérieur de l'alésage (5) de sorte à pouvoir être déplacée en va-et-vient dans l'alésage le long d'un axe longitudinal (L) de celui-ci entre une position de libération avancée et une position de verrouillage rétractée ;
- des éléments d'engagement (20) agencés autour de la tige de traction (8) au niveau d'une extrémité avant de celle-ci, où les éléments d'engagement (20), sous l'action d'un déplacement de la tige de traction (8) de la position de libération avancée vers la position de verrouillage rétractée, peuvent être déplacés d'une première position, dans laquelle les éléments d'engagement (20) permettent à la queue de porte-outil (81) d'entrer dans et de sortir de ladite partie de montage (7) de l'alésage (5), vers une seconde position, dans laquelle les éléments d'engagement (20) sont en engagement de verrouillage avec la queue de porte-outil (81) et la maintiennent fixée sur la broche (2) ;
- un élément d'actionnement (13) agencé à l'intérieur du logement (3), où l'élément d'actionnement (13) est monté avec possibilité de coulissement sur la broche (2) de sorte à pouvoir être déplacé par rapport à la broche (2) dans la direction axiale de celle-ci ; et
- un mécanisme de transfert de mouvement (30) agencé à l'intérieur du logement (3), où le mécanisme de transfert de mouvement (30) est monté sur la broche (2) et est configuré pour transformer un déplacement axial de l'élément d'actionnement (13) suivant une première direction axiale (D1) par rapport à la broche (2) en un déplacement de la tige de traction (8) de la position de libération avancée vers la position de verrouillage rétractée,
où :
- le dispositif de serrage (1) comprend un actionneur hydraulique (17) pour déplacer l'élément d'actionnement (13) axialement par rapport à la broche (2), où l'actionneur hydraulique (17) est agencé dans le logement (3) et comprend un logement de vérin (60) et un élément de piston (70) ;
- l'élément de piston (70) s'étend autour de la broche (2) et est monté avec possibilité de coulissement sur le logement de vérin (60) de sorte à pouvoir être déplacé hydrauliquement par rapport à la broche (2) de sorte à permettre à l'élément de piston (70) d'exercer une force de traction ou de poussée sur l'élément d'actionnement (13) suivant ladite première direction axiale (D1) et ainsi réaliser un déplacement de la tige de traction (8) de la position de libération avancée vers la position de verrouillage rétractée ;
- l'élément de piston (70) comprend une tête de piston annulaire (71) reçue avec possibilité de coulissement dans un espace dans le logement de vérin (60), où une première chambre hydraulique (63a) est formée dans cet espace d'un premier côté de la tête de piston (71), le logement de vérin (60) pouvant être déplacé dans la seconde position d'extrémité et l'élément de piston (70) pouvant être déplacé suivant la première direction axiale (D1) par introduction de fluide hydraulique dans cette première chambre hydraulique (63a) ; et
- l'élément d'actionnement (13) peut être pivoté par rapport au logement de vérin (60) et à l'élément de piston (70) en même temps que la broche (2) ; **caractérisé en ce :**
- **que** le logement de vérin (60) s'étend autour de la broche (2) et est monté avec possibilité de coulissement à l'intérieur du logement (3) de sorte à pouvoir être déplacé axialement par rapport à la broche (2) entre une première position d'extrémité dans laquelle le logement de vérin (60) est en butée contre un premier épaulement (61a) sur la broche (2) qui limite le déplacement du logement de vérin (60) par rapport à la broche (2) suivant ladite première direction axiale (D1), et une seconde position d'extrémité dans laquelle le logement de vérin (60) est en butée contre un second épaulement (61b) sur la broche (2) qui limite le déplacement du logement de vérin (60) par rapport à la broche (2) suivant une seconde direction axiale opposée (D2).

2. Dispositif de serrage selon la revendication 1, **caractérisé en ce que** l'élément d'actionnement (13) est configuré pour adopter une position axiale d'auto-verrouillage sur la broche (2) lorsque la tige de traction (8) a été poussée dans la position de verrouillage rétractée sous l'action de l'élément d'actionnement (13) et du mécanisme de transfert de mouvement (30), de sorte à maintenir ainsi la tige de traction (8) dans la position de verrouillage rétractée.

3. Dispositif de serrage selon la revendication 1 ou 2, **caractérisé en ce qu'**une seconde chambre hydraulique (63b) est formée dans ledit espace dans le logement de vérin (60) d'un second côté opposé de la tête de piston (71), le logement de vérin (60) pouvant être déplacé dans la première position d'extrémité et l'élément de piston (70) pouvant être déplacé suivant la seconde direction axiale (D2) par introduction de fluide hydraulique dans cette seconde chambre hydraulique (63b) de sorte à permettre à l'élément de piston (70) d'exercer une force de traction ou de poussée sur l'élément d'actionnement (13) suivant la seconde direction axiale (D2).

4. Dispositif de serrage selon l'une quelconque des revendications 1 à 3, **caractérisé en ce que** le logement de vérin (60) comprend une première paroi cylindrique (64) qui limite ledit espace dans le logement de vérin dans une direction radiale vers l'extérieur et une seconde paroi cylindrique opposée (65) qui limite ledit espace dans le logement de vérin dans une direction radiale vers l'intérieur.

5. Dispositif de serrage selon l'une quelconque des revendications 1 à 4, **caractérisé en ce :**
- **qu'**une protubérance interne (62) est prévue sur un côté intérieur du logement de vérin (60), où le logement de vérin (60) est configuré pour être en butée contre le premier épaulement (61a) sur la broche (2) via cette protubérance interne (62) dans ladite première position d'extrémité et pour être en butée contre le second épaulement (61b) sur la broche (2) via cette protubérance interne (62) dans ladite seconde position d'extrémité ; et
- **que** la protubérance interne (62) sur le logement de vérin (60) est reçue avec un jeu dans un intervalle formé entre les premier et second épaulements (61a, 61b) sur la broche (2).

6. Dispositif de serrage selon l'une quelconque des revendications 1 à 5, **caractérisé en ce que** le logement de vérin (60) est configuré pour être hors de contact de la broche (2) lorsqu'il adopte une position axiale intermédiaire entre lesdites première et seconde positons d'extrémité.

7. Dispositif de serrage selon la revendication 6, **caractérisé en ce que** le dispositif de serrage (1) comprend un premier mécanisme de rappel à ressort (90) qui est configuré pour agir sur le logement de vérin (60), où :
- le logement de vérin (60) peut être déplacé de ladite position axiale intermédiaire vers la première position d'extrémité contre l'effet d'une force de ressort du mécanisme de rappel (90) et de la première position d'extrémité vers la position axiale intermédiaire sous l'effet de cette force de ressort ; et
- le logement de vérin (60) peut être déplacé de ladite position axiale intermédiaire vers la seconde position d'extrémité contre l'effet d'une force de ressort du mécanisme de rappel (90) et de la seconde position d'extrémité vers la position axiale intermédiaire sous l'effet de cette force de ressort.

8. Dispositif de serrage selon l'une quelconque des revendications 1 à 7, **caractérisé en ce que** l'élément de piston (70) comprend une tige de piston en forme de manchon (73) qui est fixée sur la tête de piston (71), où l'élément de piston (70) est configuré pour exercer ladite force de traction ou de poussée sur l'élément d'actionnement (13) au moyen de la tige de piston (73).

9. Dispositif de serrage selon la revendication 8, **caractérisé en ce que** la tige de piston (73) est configurée pour délimiter la première chambre hydraulique (63a) dans une direction radiale vers l'intérieur.

10. Dispositif de serrage selon l'une quelconque des revendications 1 à 9, **caractérisé en ce que** l'élément d'actionnement (13) a la forme d'un manchon, où l'élément d'actionnement (13) est agencé autour d'une paroi périphérique (14) de la broche (2) et est monté avec possibilité de coulissement sur cette paroi périphérique de sorte à pouvoir être déplacé axialement par rapport à la broche.

11. Dispositif de serrage selon la revendication 10, **caractérisé en ce :**
- **que** le mécanisme de transfert de mouvement (30) comprend une première cale (40) reçue avec possibilité de coulissement dans une première ouverture (45) qui s'étend radialement à travers la paroi périphérique (14) de la broche (2), où la première cale (40) est configurée pour pousser la tige de traction (8) vers la position de verrouillage rétractée lorsqu'elle est poussée radialement vers l'intérieur dans la première ouverture (45) ;
- **que** la première cale (40) comprend une première surface de réception de pression (41) qui est orientée vers l'extérieur de la broche (2) ;
- **que** l'élément d'actionnement (13) sur son côté intérieur est doté d'une première surface d'application de pression (31) laquelle est orientée vers l'intérieur afin de venir au contact de la première surface de réception de pression (41) et présente une distance radiale par rapport à l'axe longitudinal (L) qui augmente lorsqu'elle est observée suivant la première direction axiale (D1) ; et
- **que** la première surface d'application de pression (31) est configurée pour pousser la première cale (40) radialement vers l'intérieur dans la première ouverture (45) en appuyant contre la première surface de réception de pression (41) lorsque l'élément d'actionnement (13) est déplacé suivant la première direction axiale (D1), la première surface d'application de pression (31) et la première surface de réception de pression (41) étant de préférence inclinées par rapport à l'axe longitudinal (L) d'un angle α tel que la première cale (40) maintiendra l'élément d'actionnement (13) dans une position axiale d'auto-verrouillage sur la paroi périphérique (14) lorsque la tige de traction (8) a été poussée dans la position de verrouillage rétractée sous l'action de l'élément d'actionnement (13) et de la première cale (40).

12. Dispositif de serrage selon la revendication 11, **caractérisé en ce que** la première cale (40) comprend une surface de cale (48), laquelle est orientée vers l'extrémité arrière (2b) de la broche (2) et est en contact avec une première surface de coulissement (18) sur la tige de traction orientée vers l'extrémité avant (2a) de la broche.

13. Dispositif de serrage selon la revendication 12, **caractérisé en ce :**
- **que** le mécanisme de transfert de mouvement (30) comprend une seconde cale (50) reçue avec possibilité de coulissement dans une seconde ouverture (55) qui s'étend radialement à travers la paroi périphérique (14) de la broche (2), où la seconde cale (50) comprend une surface de cale (59), laquelle est orientée vers l'extrémité avant (2a) de la broche (2) et est en contact avec une seconde surface de coulissement (19) sur la tige de traction orientée vers l'extrémité arrière (2b) de la broche, et une seconde surface de réception de pression (52) laquelle est orientée vers l'extérieur de la broche (2), la seconde cale (50) étant configurée pour pousser la tige de traction (8) vers la position de libération avancée lorsqu'elle est poussée radialement vers l'intérieur dans la seconde ouverture (55) ;
- **que** l'élément d'actionnement (13) sur son côté intérieur est doté d'une seconde surface d'application de pression (32) laquelle est orientée vers l'intérieur afin de venir au contact de la seconde surface de réception de pression (52) et présente une distance radiale par rapport à l'axe longitudinal (L) qui augmente lorsqu'elle est observée suivant la seconde direction axiale (D2) ; et
- **que** la seconde surface d'application de pression (32) est configurée pour pousser la seconde cale (50) radialement vers l'intérieur dans la seconde ouverture (55) en appuyant contre la seconde surface de réception de pression (52) lorsque l'élément d'actionnement (13) est déplacé suivant la seconde direction axiale (D2).

14. Dispositif de serrage selon la revendication 13, **caractérisé en ce que** le dispositif de serrage (1) comprend deux dites secondes cales (50) ou plus, de préférence trois, espacées dans la direction circonférentielle de la paroi périphérique (14), chaque seconde cale (50) étant reçue dans une seconde ouverture respective (55) qui s'étend radialement à travers la paroi périphérique (14).

15. Dispositif de serrage selon l'une quelconque des revendications 11 à 14, **caractérisé en ce que** le dispositif de serrage (1) comprend deux dites premières cales (40) ou plus, de préférence trois, espacées dans la direction circonférentielle de la paroi périphérique (14), chaque première cale (40) étant reçue dans une première ouverture respective (45) qui s'étend radialement à travers la paroi périphérique (14).
